## Europäisches Patentamt

## European Patent Office

## Office européen des brevets

(11) Publication number: **0 091 164**
**B1**

(12) **EUROPEAN PATENT SPECIFICATION**

(45) Date of publication of patent specification: **19.11.87**

(21) Application number: **83200454.3**

(22) Date of filing: **22.03.83**

(51) Int. Cl.⁴: **F 16 K 15/06**

(54) **Device passing a pressurized medium e.g. an adjustable flow rate limiter, a return valve or a flow rate meter.**

(30) Priority: **25.03.82 NL 8201247**

(43) Date of publication of application:
**12.10.83 Bulletin 83/41**

(45) Publication of the grant of the patent:
**19.11.87 Bulletin 87/47**

(84) Designated Contracting States:
**AT BE CH DE FR GB IT LI NL SE**

(56) References cited:
**FR-A-2 110 509**
**FR-A-2 234 500**
**FR-A-2 367 236**
**US-A-3 048 188**
**US-A-4 172 469**

(73) Proprietor: **Ocean B.V.**
**No. 26, Lagestraat**
**NL-6953 BD Dieren (NL)**

(72) Inventor: **van Rooy, Jacob**
**51 Gasthuisbouwing**
**NL-6991 TS Rheden (NL)**

(74) Representative: **Schumann, Bernard Herman Johan et al**
**OCTROOIBUREAU ARNOLD & SIEDSMA**
**Sweelinckplein 1**
**NL-2517 GK The Hague (NL)**

Courier Press, Leamington Spa, England.

## Description

The invention relates to a device for passing a pressurized medium e.g. an adjustable flow rate limiter, a return valve or a flow rate meter, comprising a housing having a medium inlet and a medium outlet, a valve seat arranged between said medium inlet and said medium outlet, a valve member corresponding to and co-operating with said valve seat and supported by a stem axially movable by means of a guide rigidly coupled with said housing, spring means urging said valve member towards said valve seat.

For an easy axial displacement inside the guide of the stem, the stem and the wall have a given amount of clearance. Due to this clearance often an undesirable phenomenon occurs during the passage of medium in that the valve member on the stem starts a vibratory motion, the amplitude of which is determined by the amount of clearance. When the maximum amplitude is attained, the lateral motion abruptly brakes so that a very troublesome rattling noise may be produced. Dependent on the structure even resonance phenomena may occur at given flow rates.

Such a device is known and disclosed in FR—A—2 110 509.

This anti-return valve comprises a sealing ring which is arranged at the downstream end of the guide in which also the stem is axially movable. This sealing ring brakes the axial movement of the stem and exhibits also a guiding function. However, there is always a clearance between the stem and the guide at an upstream point of the guide. Therefore, this known anti-return valve has the aforementioned disadvantage.

The invention has for its object to eliminate or at least to control these undesirable vibrations to an extent such that abrupt striking against the lateral stops can no longer occur so that rattling noise nuisance is avoided. According to a first embodiment of the invention these drawbacks are overcome by providing means for resiliently biasing the stem into clearance-free contact with the guide at two points spaced apart along the stem. According to a second embodiment of the invention said stem comprises an axially extending elongate part resiliently biased towards said guide and arranged such that on lateral movement of the stem the elongate part bends progressively into increasing line contact with the guide.

The invention will now be set out with reference to two embodiments of the invention. The drawing shows in:

Figure 1 a cross-sectional view of the first embodiment of a return valve in accordance with the invention,

Figure 2 an elevational view of the plane II—II in Figure 1.

Figure 3 a partial cross-sectional view of a second embodiment of the invention, and

Figure 4 an elevational view taken on the plane VI—VI in Figure 3.

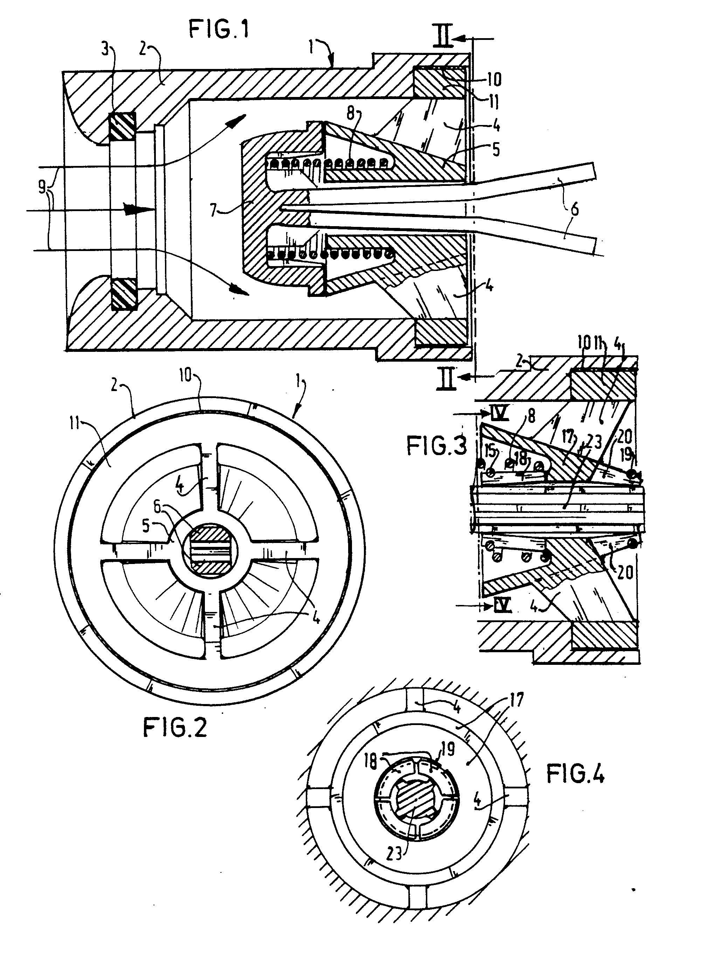

Figure 1 shows a return valve 1 comprising a rotation-symmetrical housing 2, a resilient ring 3 serving as a valve seat, a guide 5 rigidly coupled with the housing 2 by wings 4, through which guide a stem having two parts 6 is movable, whose end facing the ring 3 has fastened to it a valve member 7, which is urged by helical spring means 8 towards the ring 3.

The arrows 9 indicate the direction of the stream of medium. By the pressure of this medium the valve member 7 moves away from the ring 3 so that the return valve 1 can be passed through. In the opposite direction the valve is closed so that the medium is prevented from flowing back. In the situation shown the return valve 1 is in the open state.

The stem parts 6 resiliently move outwardly so that they are constantly in contact with the inner wall of the guide 5.

The wings 4 are fastened to a ring 11 fastened to an inner wall of the housing 2 by a gluing surface 10.

Figure 2 shows an elevational view II—II in Figure 1.

It should be noted that corresponding elements are designated by the same reference symbols in all Figures.

Figures 3 and 4 show a second embodiment of a return valve in accordance with the invention. The guide 17 of this embodiment is provided with four wall segments 18 loaded by an annular spring 15 at the upstream end of the guide 17, whereas at the downstream end of the guide 17 four wall segments 20 are loaded by an annular spring 19. By this double, resilient, clearance-free guide substantially any undesirable vibration or resonance is excluded.

Attention is drawn to the various shapes of stems and wall segments or walls co-operating herewith. In order to avoid deposits and hence a deteriorating guiding effect it is preferred to use a relatively high contact pressure which is obtained by relatively small contact surfaces.

The invention is not limited to the embodiments described above. It will be obvious that adjustable closing members, flow-rate limiters, flow meters and the like comprising a stem-supported valve member are lying within the scope of the invention. It is furthermore noted that a device embodying the invention can be constructed so that the front face of the stem itself serves as a valve member so that the mushroom-shaped construction shown in the Figures is not employed.

## Claims

1. Device (1) for passing a pressurized medium e.g. an adjustable flow rate limiter, a return valve or flow rate meter, comprising a housing (2) having a medium inlet and a medium outlet, a valve seat (3) arrranged between said medium inlet and said medium outlet, a valve member (7) corresponding to and co-operating with said valve seat (3) and supported by a stem (6, 23) axially movable by means of a guide (5, 17) rigidly coupled with said housing (2), spring means (8) urging said valve member (7) towards said valve seat (3), characterized in that means are provided for resiliently biasing the stem into clearance-free contact with the guide at two points spaced apart along the stem.

2. Device (1) as claimed in claim 1, characterized in that said guiding means (15 and 18, 19 and 20) comprise at least two guide wall parts (18; 20) arranged at said upstream and downstream end of the guide (17) respectively, and resiliently movable towards said stem (23).

3. Device (1) for passing a pressurized medium e.g. an adjustable flow rate limiter, a return valve or a flow rate meter, comprising a housing (2) having a medium inlet and a medium outlet, a valve seat (3) arranged between said medium inlet and said medium outlet, a valve member (7) corresponding to and co-operating with said valve seat (3) and supported by a stem (6, 23) axially movable by means of a guide (5, 17) rigidly coupled with said housing (2), spring means (8) urging said valve member (7) towards said seat (3), characterized in that said stem comprises an axially extending elongate part resiliently biased towards said guide and arranged such that on lateral movement of the stem the elongate part bends progressively into increasing line contact with the guide.

**Patentansprüche**

1. Durchflußvorrichtung (1) für ein Druckmedium, z. B. verstellbarer Durchflußbegrenzer, Rückflußventil oder Durchsatzmeßgerät, mit einem Gehäuse (2) mit einem Mediumeinlaß und einem Mediumauslaß, einem zwischen dem Mediumeinlaß und dem Mediumauslaß angeordneten Ventilsitz (3), einem Ventilteil (7), das mit dem Ventilsitz (3) korrespondiert und mit diesem zusammenwirkt und von einem Schaft (6, 23) mit Hilfe einer Führung (5, 17) axial bewegbar getragen wird, die mit dem Gehäuse (2) fest verbunden ist, Federn (8), die das Ventilteil (7) gegen den Ventilsitz (3) drücken, dadurch gekennzeichnet, daß Einrichtungen vorgesehen sind, um dem Schaft in spielfreien Kontakt mit der Führung (5, 17) an zwei auf dem Schaft im Abstand voneinander liegenden Punkten elastisch vorzuspannen.

2. Durchflußvorrichtung nach Anspruch 1, dadurch gekennzeichnet, daß die Führungseinrichtung (15, 18, 19, 20) wenigstens zwei Führungswandteile (18; 20) enthält, die jeweils am vorderen und hinteren Ende der Führung (17) angeordnet sind und elastisch gegen den Schaft (23) bewegbar sind.

3. Durchflußvorrichtung (1) für ein Druckmediums, z. B. verstellbarer Durchflußbegrenzer, Ruckflußventil oder Durchsatzmeßgerät mit einem Gehäuse (2) mit einem Mediumeinlaß und einem Mediumauslaß, einem zwischen dem Mediumeinlaß und dem Mediumauslaß angeordneten Ventilsitz (3), einem Ventilteil (7), das zum Ventilsitz (3) korrespondiert und mit diesem zusammenarwirkt und von einem Schaft (6, 23) mit Hilfe einer Führung (5, 17) axial bewegbar getragen wird, die mit dem Gehäuse (2) fest verbunden ist, Federn (8), die das Ventilteil (7) gegen den Ventilsitz (3) drücken, dadurch gekennzeichnet, daß der Schaft einen sich in axialer Richtung erstreckenden länglichen Teil enthält, der elastisch gegen die Führung vorgespannt ist und so angeordnet ist, daß bei lateraler Bewegung des Schaftes sich der elastische Teil progressiv verbiegt, und dadurch den Kontaktdruck gegen die Führung erhöht.

**Revendications**

1. Dispositif (1) permettant le passage d'un fluide sous pression, comme par exemple un limiteur de débit réglable, une soupape de décharge ou un débimètre, du type comprenant un corps (2) présentant une entrée de fluide et une sortie de fluide, un siège de clapet (3) disposé entre cette entrée de fluide et cette sortie de fluide, un obturateur (7) qui correspond à ce siège de clapet (3) et coopère avec lui et qui est soutenu par une tige (6, 23) mobile axialement, à l'aide d'un guide (5, 17) solidaire à demeure du corps (2), et des moyens élastiques (8) sollicitant cet obturateur (7) vers le siège de clapet (3), caractérisé en ce qu'il est prévu des moyens de sollicitation élastique appliquant la tige en contact exempt de jeu avec le guide en deux emplacements espacés sur la longueur de la tige.

2. Dispositif (1) tel que revendiqué dans la revendication 1, caractérisé en ce que les moyens de guidage (15 et 18, 19 et 20) comprennent au moins deux parties de cloison de guidage (18, 20) disposées respectivement à l'extrémité amont et l'extrémité aval du guide (17) et pouvant se déplacer élastiquement en direction de la tige (23).

3. Dispositif (1) permettant le passage d'un fluide sous pression, comme par exemple un limiteur de débit réglable, une soupape de décharge ou un débimètre, du type comprenant un corps (2) présentant une entrée de fluide et une sortie de fluide, un siège de clapet (3) disposé entre cette entrée de fluide et cette sortie de fluide, un obturateur (7) qui correspond à ce siège de clapet (3) cooppère avec lui et qui est soutenu par une tige (6, 23) mobile axialement, à l'aide d'un guide (5, 17) solidaire à demeure du corps (2), et des moyens élastiques (8) sollicitant cet obturateur (7) vers le siège de clapet (3), caractérisé en ce que la tige comprend une partie allongée s'étendant axialement, qui est soumise à une sollicitation élastique en direction du guide et est agencée de façon que, lors du déplacement latéral de la tige, cette partie allongée s'incurve progressivement en offrant un contact linéaire croissant avec le guide.

FIG.1

FIG.2

FIG.3

FIG.4